# EUROPÄISCHE PATENTSCHRIFT

(11) **EP 2 973 809 B1**
(45) Veröffentlichungstag und Bekanntmachung des Hinweises auf die Patenterteilung: **11.01.2017**
(21) Anmeldenummer: 14709266.2
(22) Anmeldetag: 10.03.2014
(51) Int. Cl.: H01M 8/0202, H01M 8/0258, H01M 8/0271, H01M 8/0297, H01M 8/0267, H01M 8/04007

(54) **BIPOLARPLATTE FÜR EINE BRENNSTOFFZELLE, BRENNSTOFFZELLE UND VERFAHREN ZUR HERSTELLUNG DER BIPOLARPLATTE**
BIPOLAR PLATE FOR A FUEL CELL, FUEL CELL AND METHOD FOR PRODUCING THE BIPOLAR PLATE
PLAQUE BIPOLAIRE POUR UNE PILE À COMBUSTIBLE, PILE À COMBUSTIBLE ET PROCÉDÉ PERMETTANT DE FABRIQUER LA PLAQUE BIPOLAIRE

(30) Priorität: 13.03.2013 DE 102013204308
(43) Veröffentlichungstag der Anmeldung: 20.01.2016
(73) Patentinhaber: Volkswagen Aktiengesellschaft, 38440 Wolfsburg (DE)
(72) Erfinder: ZILLICH, Christian, 38100 Braunschweig (DE); RICHTER, Mario, 38444 Wolfsburg (DE)
(74) Vertreter: Gulde & Partner
(86) Internationale Anmeldenummer: PCT/EP2014/054605
(87) Internationale Veröffentlichungsnummer: WO 2014/139964

(56) Entgegenhaltungen:
- DE-A1-102006 058 335
- DE-A1-102011 117 095

## Beschreibung

Die Erfindung betrifft eine Bipolarplatte für eine Brennstoffzelle, wobei die Bipolarplatte eine Brennstoff-Seite, eine Öxidationsmittel-Seite, zwei Einzelplatten und einen, zwischen den Einzelplatten angeordneten Kühlmittel-Hohlraum aufweist, wenigstens eine der Einzelplatten an ihrer Außenfläche wenigstens eine Dichtung aufweist und die Einzelplatten mittels wenigstens einer Verbindungsnaht verbunden sind. Zudem betrifft die Erfindung eine Brennstoffzelle umfassend wenigstens eine Bipölarplatte und ein Verfahren zur Herstellung der Bipolarplatte.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die so genannte Membran-Elektroden-Einheit (MEA für membrane electrode assembly), die ein Verbund aus einer ionenleitenden, insbesondere protonenleitenden Membran und jeweils einer beidseitig an der Membran angeordneten Elektrode (Anode und Kathode) ist. Zudem können Gasdiffusionslagen (GDL) beidseitig der Membran-Elektroden-Einheit an den, der Membran abgewandten Seiten der Elektroden angeordnet sein. In der Regel wird die Brennstoffzelle durch eine Vielzahl, im Stapel (stack) angeordneter MEAs gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion von O₂ zu O²⁻ unter Aufnahme der Elektronen stattfindet. Gleichzeitig reagieren im Kathodenraum diese Sauerstoffanionen mit den, über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Die derzeit am weitesten entwickelte Brennstoffzellentechnologie basiert auf Polymerelektrolytmembranen (PEM), bei denen die Membran selbst aus einem Polymerelektrolyt besteht. Hierbei werden oft säuremodifizierte Polymere, insbesondere perfluorierte Polymere, eingesetzt. Der am weitesten verbreitete Vertreter dieser Klasse von Polymerelektrolyten ist eine Membran aus einem sulfonierten Polytetrafluorethylen-Copolymer (Handelsname: Nafion; Copolymer aus Tetrafluorethylen und einem Sulfonylsäurefluorid-Derivat eines Perfluoralkylvinylethers). Die elektrolytische Leitung findet dabei über hydratisierte Protonen statt, weshalb für die Protonenleitfähigkeit das Vorhandensein von Wasser Bedingung ist und im Betrieb der PEM-Brennstoffzelle ein Anfeuchten der Betriebsgase erforderlich ist. Aufgrund der Notwendigkeit des Wassers ist die maximale Betriebstemperatur dieser Brennstoffzellen bei Normdruck auf unter 100 °C beschränkt. In Abgrenzung von Hochtemperatur-Polymerelektrolytmembran-Brennstoffzellen (HT-PEM-Brennstoffzellen), deren elektrolytische Leitfähigkeit auf einen durch elektrostatische Komplexbindung an ein Polymergerüst der Polymerelektrolytmembran gebundenen Elektrolyten beruht (beispielsweise Phosphorsäure-dotierte Polybenzimidazol(PBI)-Membrane) und die bei Temperaturen von 160 °C betrieben werden, wird dieser Brennstoffzellentyp auch als Niedertemperatur-Polymerelektrolytmembran-Brennstoffzelle (NT-PEM-Brennstoffzelle) bezeichnet.

Die Brennstoffzelle wird durch eine Vielzahl, im Stapel angeordneter Einzelzellen gebildet, sodass auch von einem Brennstoffzellenstapel gesprochen wird. Zwischen den Membran-Elektroden-Einheiten sind Bipolarplatten angeordnet, welche eine Versorgung der Einzelzellen mit den Betriebsmedien, also den Reaktanten und einer Kühlflüssigkeit sicherstellen. Zudem sorgen die Bipolarplatten für einen elektrisch leitfähigen Kontakt zu den Membran-Elektroden-Einheiten.

Zwischen den Membran-Elektroden-Einheiten und den Bipolarplatten sind Dichtungen angeordnet, welche die Anoden- und Kathodenräume nach außen abdichten und ein Austreten der Betriebsmedien aus der Brennstoffzelle verhindern.

Die Dichtungen können seitens der Membran-Elektroden-Einheiten oder der Bipolarplatten vorgesehen und insbesondere mit diesen Komponenten verbunden sein. Zudem können die Dichtungen auch in Form von Einlegedichtungen ausgeführt werden, ohne auf den Bipolarplatten oder den Membran-Elektroden-Einheiten befestigt worden zu sein.

Metallische Bipolarplatten von Brennstoffzellen bestehen gewöhnlicher Weise aus zwei Einzelplatten (Hälften), welche durch Schweißen miteinander verbunden werden. Die DE 102011009805 A1 und die DE 102011117095 A1 beschreiben Bipolarplatten, auf welchen Polymerdichtungen aufgebracht und deren Einzelplatten mittels Schweißnähten miteinander verbunden sind.

Derzeit werden die Einzelplatten zunächst verschweißt und erst anschließend mit einer Dichtung versehen, da durch die Dichtung nicht hindurchgeschweißt werden kann. Muss jedoch beim Aufbringen der Dichtung auf die Bipolarplatte wie z. B. beim Spritzgießen Druck aufgewendet werden, besteht die Gefahr einer Beschädigung der Bipolarplatte in Bereichen, in denen die Hälften der Bipolarplatte durch Spalte voneinander getrennt sind. Verwendet man drucklose Verfahren wie z. B. Kleben, ist die prozesssichere Handhabung der Dichtung sehr aufwändig. Durch eine Reduktion des Druckes beim Aufbringen der Dichtung soll eine Überlastung der Bipolarplatte verhindert werden. Da z. B. beim Spritzguss aufgrund der Viskosität des Dichtungsmaterial bestimmte Mindestdrücke zum Aufbringen der Dichtung notwendig sind, schränkt eine Reduktion des Einspritzdrucks die Auswahl verwendeter Dichtungsmaterialien stark ein.

Andererseits können die Dichtungen auch auf den Membranen der Brennstoffzelle angebracht werden. Dabei limitiert die thermische und mechanische Festigkeit der Membran den Herstellungsprozess der Dichtung, was zu langen Prozesszeiten und hohen Ausschussraten führt. Um die Membran nicht zu schädigen, werden Betriebsparameter entsprechend moderat gewählt. Dies schränkt zum einen die Anzahl verwendeter Dichtungsmaterialien ein und führt zum anderen zu langen Prozesszeiten.

Der Erfindung liegt nun die Aufgabe zugrunde, eine Bipolarplatte und ein Verfahren zur Herstellung der Bipolarplatte bereitzustellen, durch welche Ausschusskosten und eine zur Fertigung einer Brennstoffzelle benötigte Zeit reduziert werden können.

Diese Aufgabe wird durch eine Bipolarplatte für eine Brennstoffzelle gelöst, wobei die Bipolarplatte eine Brennstoff-Seite, eine Oxidationsmittel-Seite, zwei Einzelplatten und einen, zwischen den Einzelplatten angeordneten Kühlmittel-Hohlraum aufweist, wenigstens eine der Einzelplatten an ihrer Außenfläche wenigstens eine Dichtung aufweist und die Einzelplatten mittels wenigstens einer Verbindungsnaht verbunden sind. Kennzeichnend kreuzt und/oder überlappt sich die wenigstens eine Verbindungsnaht nicht mit der wenigstens einen Dichtung.

Die Brennstoff-Seite und die Oxidationsmittel-Seite der Bipolarplatte sind jene Seiten, welche im Betrieb der Bipolarplatte innerhalb einer Brennstoffzelle mit Oxidationsmittel oder Brennstoff beaufschlagt werden. Als Brennstoff dient insbesondere Wasserstoff H₂ und als Oxidationsmittel Sauerstoff O₂, welcher insbesondere durch das Zuführen von Luft der Brennstoffzelle zur Verfügung gestellt wird.

Die Außenfläche bezeichnet dabei eine vom Kühlmittel-Hohlraum abgewandte Seite (eine Flachseite) der jeweiligen Einzelplatte. Die wenigstens eine Dichtung ist mit der Bipolarplatte verbunden, indem die Dichtung auf die Bipolarplatte aufgebracht ist, insbesondere angespritzt ist. Die Dichtung dichtet im Betrieb einen Übergang (Spalt) zwischen der Bipolarplatte und einer Membran der Brennstoffzelle insbesondere umlaufend ab. Im Sinne der Erfindung wird somit unter dem Begriff "Dichtung" eine Dichtung verstanden, welche einen Bereich auf einer Bipolarplatte insbesondere umlaufend begrenzt. Die Verbindungsnaht dichtet hingegen einen Spalt zwischen den Einzelplatten der Bipolarplatte insbesondere umlaufend ab.

Dass sich die wenigstens eine Verbindungsnaht und die wenigstens eine Dichtung nicht kreuzen, überlappen und/oder berühren bedeutet, dass diese in einer Draufsicht normal auf die Hauptflächen der Bipolarplatte voneinander über insbesondere deren gesamte Längen zueinander beabstandet sind, wobei insbesondere der Abstand im Grenzfall im Wesentlichen auch gleich null sein kann. Dabei überlappt und/oder kreuzt sich insbesondere keine der Verbindungsnähte mit einer Dichtung. Im Speziellen überlappt und/oder kreuzt sich insbesondere keine der Verbindungsnähte mit einer umlaufenden Dichtung. Mit anderen Worten wird die Dichtung zumindest in jenen Bereichen, welche innerhalb der Brennstoffzelle eine dichtende Funktion ausüben, nicht von einer Verbindungsnaht überlappt und/oder gekreuzt.

Bevorzugt sind die Einzelplatten Bleche und/oder die Verbindungsnähte Schweißnähte. Durch den Einsatz von Einzelplatten aus (metallischen) Blechen, welche mittels Schweißnähten verbunden werden, können kostengünstig Bipolarplatten hergestellt werden.

Durch die Erfindung wird es ermöglicht, die für eine Brennstoffzelle notwendigen Dichtungen zunächst auf den Bipolarplatten anzubringen, also die Dichtungen auf den Einzelplatten (Hälften) der Bipolarplatten aufzutragen und die Einzelplatten anschließend zu verbinden, insbesondere zu verschweißen. Dadurch ist sichergestellt, dass ein Bereich auf dem die Dichtung verläuft, mechanisch stabilisiert werden kann, um eine Verformung der Einzelplatte beim Auftragen der Dichtung, z. B. durch ein Spritzgussverfahren, zu verhindern. Die Herstellung der Bipolarplatten, bei der zunächst die Dichtung auf den Hälften aufgebracht wird und erst anschließend die Hälften verschweißt werden, wird erst dadurch ermöglicht, dass sich Dichtungs- und Schweißnahtverläufe nicht kreuzen oder gar übereinander liegen, da sonst eine Verschweißung der Hälften nicht mehr möglich ist. Es wird somit eine flexiblere und schnellere Herstellung der Dichtung und der Bipolarplatte ermöglicht. Der Herstellungsprozess der Dichtung muss sich nicht mehr an den geringen Festigkeiten der Membran oder der geringen Druckstabilität von Bereichen einer bereits zusammengschweißten Bipolarplatte orientieren, die Spalte zwischen den Einzelplatten aufweisen. Eine solche Anordnung der Dichtungs- und Schweißnahtverläufe war gemäß dem Stand der Technik nicht bekannt. Deshalb wurde bisher versucht das Problem zu umgehen.

Gemäß einer bevorzugten Ausgestaltung der Erfindung ist vorgesehen, dass die Bipolarplatte wenigstens eine, die Bipolarplatte durchdringende Brennstoff-Öffnung aufweist, wobei die wenigstens eine Dichtung wenigstens eine, zumindest auf der Oxidationsmittel-Seite angeordnete Brennstoff-Dichtung umfasst, die wenigstens eine Verbindungsnaht wenigstens eine Brennstoff-Verbindungsnaht umfasst, und die wenigstens eine Brennstoff-Öffnung von der wenigstens einen Brennstoff-Dichtung und der wenigstens einen Brennstoff-Verbindungsnaht umlaufend umschlossen ist. Vorzugsweise umfasst die Bipolarplatte wenigstens zwei Brennstoff-Öffnungen, welche insbesondere jeweils von wenigstens einer Brennstoff-Dichtung und einer Brennstoff-Verbindungsnaht umlaufend umschlossen sind.

Gemäß einer ferner bevorzugten Ausgestaltung der Erfindung ist vorgesehen, dass die Bipolarplatte wenigstens eine, die Bipolarplatte durchdringende Oxidationsmittel-Öffnung aufweist, wobei die wenigstens eine Dichtung wenigstens eine zumindest auf der Brennstoff-Seite angeordnete Oxidationsmittel-Dichtung umfasst, die wenigstens eine Verbindungsnaht wenigstens eine Oxidationsmittel-Verbindungsnaht umfasst, und die wenigstens eine Oxidationsmittel-Öffnung von der wenigstens einen Oxidationsmittel-Dichtung und der wenigstens einen Oxidationsmittel-Verbindungsnaht umlaufend umschlossen ist. Vorzugsweise umfasst die Bipolarplatte wenigstens zwei Oxidationsmittel-Öffnungen, welche insbesondere jeweils von wenigstens einer Oxidationsmittel-Dichtung und einer Oxidationsmittel-Verbindungsnaht umlaufend umschlossen sind.

Die Brennstoff- und Oxidationsmittel-Öffnungen dienen zur Durchführung des Brennstoffs und Oxidationsmittels, also der Reaktanten durch die Bipolarplatte innerhalb einer Brennstoffzelle. Mittels der Brennstoff-Dichtung auf der Oxidationsmittel-Seite wird sichergestellt, dass der Brennstoff nicht in einen Oxidationsmittel-Bereich auf der Oxidationsmittel-Seite oder in die Umgebung gelangt. Analog dazu wird Mittels der Oxidationsmittel-Dichtung auf der Brennstoff-Seite sichergestellt, dass das Oxidationsmittel nicht in einen Brennstoff-Bereich auf der Brennstoff-Seite oder in die Umgebung gelangt. Die Brennstoff- und Oxidationsmittel-Verbindungsnähte dienen zur Abdichtung des Kühlmittel-Hohlraums gegenüber den Brennstoff- und Oxidationsmittel-Öffnungen.

Gemäß einer weiteren bevorzugten Ausgestaltung der Erfindung ist vorgesehen, dass die Bipolarplatte wenigstens eine, die Bipolarplatte durchdringende Kühlmittel-Öffnung aufweist, welche strömungstechnisch mit dem Kühlmittel-Hohlraum verbunden ist, wobei die wenigstens eine Dichtung beidseitig der Bipolarplatte angeordnete Kühlmittel-Dichtungen umfasst, welche die wenigstens eine Kühlmittel-Öffnung umlaufend umschließen. Vorzugsweise umfasst die Bipolarplatte wenigstens zwei Kühlmittel-Öffnungen, welche insbesondere jeweils beidseitig der Bipolarplatte von Kühlmittel-Dichtungen umlaufend umschlossen sind. Die Kühlmittel-Öffnungen dienen zur Durchführung des Kühlmittels durch die Bipolarplatte innerhalb einer Brennstoffzelle. Mittels der Kühlmittel-Dichtung wird sichergestellt, dass das Kühlmittel nicht in den Brennstoff- oder den Oxidationsmittel-Bereich oder in die Umgebung gelangt.

Die Brennstoff- und Oxidationsmittel-Verbindungsnähte dichten einen Bereich zwischen den Einzelplatten um die jeweiligen Öffnungen umlaufend ab. Die Brennstoff-, Oxidationsmittel-, und Kühlmittel-Dichtungen dichten im Betrieb einen Bereich zwischen der Bipolarplatte und den angrenzenden Membranen der Brennstoffzelle umlaufend ab.

Vorzugsweise ist vorgesehen, dass die wenigstens eine Dichtung wenigstens eine Brennstoff-Dichtung umfasst, welche auf der Brennstoff-Seite die wenigstens eine Brennstoff-Öffnung umlaufend umschließt. Ferner bevorzugt ist die wenigstens eine Brennstoff-Dichtung zwischen der wenigstens einen Brennstoff-Verbindungsnaht und der wenigstens einen Brennstoff-Öffnung angeordnet und zwischen der Brennstoff-Dichtung und der Brennstoff-Verbindungsnaht ist zumindest eine, die Einzelplatte auf der Brennstoff-Seite durchdringende Aussparung angeordnet. Insbesondere werden auf der Brennstoff-Seite wenigstens zwei Brennstoff-Öffnungen von jeweils einer Brennstoff-Dichtung umschlossen.

Gemäß einer weiteren bevorzugten Ausgestaltung der Erfindung ist vorgesehen, dass die wenigstens eine Dichtung wenigstens eine Oxidationsmittel-Dichtung umfasst, welche auf der Oxidationsmittel-Seite die wenigstens eine Oxidationsmittel-Öffnung umlaufend umschließt. Ferner bevorzugt ist die wenigstens eine Oxidationsmittel-Dichtung zwischen der wenigstens einen Oxidationsmittel-Verbindungsnaht und der wenigstens einen Oxidationsmittel-Öffnung angeordnet und zwischen der Oxidationsmittel-Dichtung und der Oxidationsmittel-Verbindungsnaht ist zumindest eine, die Einzelplatte auf der Oxidationsmittel-Seite durchdringende Aussparung angeordnet. Insbesondere werden auf der Oxidationsmittel-Seite wenigstens zwei Oxidationsmittel-Öffnungen von jeweils einer Oxidationsmittel-Dichtung umschlossen.

Die Brennstoff-Dichtung auf der Brennstoff-Seite und die Oxidationsmittel-Dichtungen auf der Oxidationsmittel-Seite dichten im Betrieb einen Bereich zwischen der Bipolarplatte und den angrenzenden Membranen der Brennstoffzelle umlaufend ab. Dadurch kann eine exaktere Dosierung des Brennstoffs und/oder des Oxidationsmittels in den Brennstoff- und/oder Oxidationsmittel-Bereich erfolgen. Durch die bevorzugte Anordnung der Brennstoff- und/oder Oxidationsmittel-Dichtungen innerhalb der Brennstoff- und Oxidationsmittel-Verbindungsnähte in Kombination mit den Aussparungen wird erreicht, dass eine Beaufschlagung des Brennstoff- und Oxidationsmittel-Bereichs durch Querschnittsflächen der Aussparungen beeinflusst werden kann. Der Brennstoff- und das Oxidationsmittel strömen also getrennt voneinander und ausgehend von den jeweiligen Öffnungen zwischen die Einzelplatten, anschließend durch die Aussparungen und gelangen so in den jeweiligen Brennstoff- oder Oxidationsmittel-Bereich. Vorzugsweise gilt dies für jeweils wenigstens zwei Brennstoff- und/oder Oxidationsmittel-Öffnungen.

Vorzugsweise ist vorgesehen, dass die wenigstens eine Verbindungsnaht eine Kühlmittel-Verbindungsnaht umfasst, welche den Kühlmittel-Hohlraum und insbesondere die Kühlmittel-Dichtungen der wenigstens einen Kühlmittelöffnung umlaufend umschließt. Die Kühlmittel-Verbindungsnaht begrenzt zwischen den Einzelplatten den Kühlmittel-Hohlraum und dichtet diesen rundumlaufend ab. Die Kühlmittel-Dichtungen und somit die Kühlmittel-Öffnungen sind innerhalb der Kühlmittel-Verbindungsnaht angeordnet, um eine Kühlmittel-Versorgung des Kühlmittel-Hohlraums über die Kühlmittel-Öffnungen zu gewährleisten.

Bevorzugt ist vorgesehen, dass die wenigstens eine Dichtung eine Brennstoff-Bereichs-Dichtung umfasst, welche einen Brennstoff-Bereich auf der Brennstoff-Seite und insbesondere die wenigstens eine Brennstoff-Verbindungsnaht umlaufend umschließt.

Ferner ist bevorzugt vorgesehen, dass die wenigstens eine Dichtung eine Oxidationsmittel-Bereichs-Dichtung umfasst, welche einen Oxidationsmittel-Bereich auf der Oxidationsmittel-Seite und insbesondere die wenigstens eine Oxidationsmittel-Verbindungsnaht umlaufend umschließt.

Die Bereichs-Dichtungen dichten den jeweiligen Brennstoff- oder Oxidationsmittel-Bereich auf den Einzelplatten umlaufend ab. Durch die Brennstoff- und/oder Oxidationsmittel-Bereichs-Dichtung ist sichergestellt, dass der Brennstoff- und/oder Oxidationsmittel-Bereich zueinander, gegenüber dem Kühlmittel und/oder der Umgebung getrennt sind.

Der Brennstoff-Bereich und/oder der Oxidationsmittel-Bereich können nach außen offene Kanäle aufweisen, über welche der Brennstoff und/oder das Oxidationsmittel in dem jeweiligen Bereich verteilt wird.

Die Anordnung der Bereichs-Dichtungen in Relation zur Kühlmittel-Verbindungsnaht kann prinzipiell auf folgende Arten erfolgen, ohne dass die Bereichs-Dichtungen, welche auf gegenüberliegenden Seiten der Bipolarplatte verlaufen, die Verbindungsnaht schneiden:
- Beide Bereichs-Dichtungen werden von der Kühlmittel-Verbindungsnaht umschlossen;
- beide Bereichs-Dichtungen umschließen die Kühlmittel-Verbindungsnaht; oder
- eine der Bereichs-Dichtungen wird von der Kühlmittel-Verbindungsnaht umschlossen, während die andere Bereichs-Dichtung die Kühlmittel-Verbindungsnaht umschließt, wobei diese Anordnung nicht die Symmetrie der obenstehenden Anordnungen aufweist.

Bevorzugt sind mehrere Verbindungsnähte integral einstückig miteinander ausgebildet. Dies ist möglich, wenn keine Dichtung zwischen ihnen verläuft. Gleichlautend sind bevorzugt mehrere Dichtungen auf der selben Seite der Bipolarplatte integral einstückig miteinander ausgebildet. Dies ist möglich, wenn keine Verbindungsnaht zwischen ihnen verläuft. Durch diese Ausgestaltungen ist eine kompaktere Anordnung der Verbindungsnähte und/oder Dichtungen möglich.

Vorzugsweise umschließt die Kühlmittel-Verbindungsnaht zumindest eine der Bereichs-Dichtungen umlaufend. Insbesondere umschließt die Kühlmittel-Verbindungsnaht alle anderen Verbindungsnähte und Dichtungen. Dadurch ist eine größere Flexibilität bei der Anordnung der Dichtungen gegeben.

Bevorzugt sind die Kühlmittel-Dichtungen wenigstens einer Kühlmittelöffnung außerhalb der zumindest einen umlaufend umschlossenen Bereichs-Dichtung angeordnet. Dadurch besteht keine Gefahr eines Übertritts des Brennstoffs und/oder des Oxidationsmittels in das Kühlmittel über diese Kühlmittel-Öffnung, da der Brennstoff und/oder das Oxidationsmittel in die Umgebung entweichen kann. Insbesondere sind die (alle) Kühlmittel-Dichtungen außerhalb der umlaufend umschlossenen Bereichs-Dichtung angeordnet.

Vorzugsweise sind die Brennstoff-Verbindungsnähte innerhalb der Oxidationsmittel-Bereichs-Dichtung angeordnet. Vorzugsweise sind die Oxidationsmittel-Verbindungsnähte innerhalb der Brennstoff-Bereichs-Dichtung angeordnet. Daraus resultiert eine vergrößerte, von den Bereichs-Dichtungen eingeschlossene Fläche.

Alternativ kann zumindest eine der Bereichs-Dichtungen die Kühlmittel-Verbindungsnaht umlaufend umschließen.

Gemäß einer bevorzugten Ausgestaltung der Erfindung ist vorgesehen, dass zumindest eine der Bereichs-Dichtungen die Kühlmittel-Verbindungsnaht umlaufend umschließt und die Kühlmittel-Verbindungsnaht mit wenigstens einer der Brennstoff-Verbindungsnähte und/oder wenigstens einer der Oxidationsmittel-Verbindungsnähte als eine kombinierte Verbindungsnaht integral (einstückig) ausgeführt ist. Insbesondere sind die (alle) Brennstoff-Verbindungsnähte und Oxidationsmittel-Verbindungsnähte integral mit der Kühlmittel-Verbindungsnaht ausgeführt. Dadurch wird eine äußerst kompakte Anordnung der Verbindungsnähte erreicht.

Vorzugsweise ist auf gegenüberliegenden Seiten des Brennstoff-Bereichs und des Oxidationsmittel-Bereichs jeweils mindestens eine Brennstoff-Einheit, Oxidationsmittel-Einheit und Kühlmittel-Einheit angeordnet. Insbesondere ist die Kühlmittel-Einheit zwischen der Brennstoff-Einheit und der Oxidationsmittel-Einheit angeordnet.

Erfindungsgemäße Bipolarplatten können bevorzugt auch für Elektrolyseure verwendet werden.

Des Weiteren wird eine Brennstoffzelle zur Verfügung gestellt, welche wenigstens eine Bipolarplatte und wenigstens zwei Membran-Elektroden-Einheiten umfasst, wobei die Bipolarplatte zwischen den Membran-Elektroden-Einheiten angeordnet ist. Bevorzugt umfasst die Brennstoffzelle eine Mehrzahl abwechselnd gestapelter Bipolarplatten und Membran-Elektroden-Einheiten. Die erfindungsgemäße Brennstoffzelle kann auch als Brennstoffzellenstapel bezeichnet werden und zeichnet sich besonders durch ihre reduzierten Kosten aufgrund der verbesserten Herstellbarkeit aus. Die wenigstens eine Dichtung dichtet einen Übergang zwischen der Bipolarplatte und der Membran. Derartige Brennstoffzellen können bevorzugt in Fahrzeugen zur Bereitstellung von elektrischer Antriebsenergie eingesetzt werden.

Ferner wird ein Verfahren zur Herstellung einer erfindungsgemäßen Bipolarplatte zur Verfügung gestellt, wobei das Verfahren die folgenden Schritte umfasst:
- Herstellen der Dichtungen auf den Einzelplatten;
- Herstellen der Verbindungsnähte zwischen den Einzelplatten.

Vorzugsweise erfolgt das Herstellen der Dichtungen auf den Einzelplatten mittels eines Spritzgussverfahrens. Bevorzugt wird dazu innerhalb eines Spritzgusswerkzeugs ein Ausgangsmaterial an die Einzelplatten gespritzt. In diesem Fall umfasst das Herstellen der Dichtungen üblicherweise einen Schritt des Aushärtens des Ausgangsmaterials der Dichtungen.

Ferner bevorzugt erfolgt das Herstellen der Dichtungen auf den Einzelplatten mittels eines Siebdruckverfahrens. Das Siebdruckverfahren stellt ebenfalls ein gängiges Verfahren zur Herstellung der Dichtungen dar.

Bevorzugt erfolgt das Herstellen der Verbindungsnähte mittels eines Schweißverfahrens, insbesondere mittels eines Laserschweißverfahrens. Dabei trifft ein Laserstrahl auf einer Seite der Bipolarplatte auf, wodurch die vom Laserstrahl getroffene Einzelplatte mit der dahinterliegenden zweiten Einzelplatte verschweißt wird.

Vorzugsweise ist vorgesehen, dass das Herstellen der Dichtung zeitlich vor dem Herstellen der Verbindungsnähte erfolgt. Somit können die Einzelplatten während des Herstellens der Dichtungen optimal auf der, den Dichtungen abgewandten Seite der Einzelplatten von einem Werkzeug, z. B. einem Spritzgusswerkzeug abgestützt werden. Dadurch werden Verformungen der Bipolarplatte verhindert und Ausschusskosten gesenkt. Zudem kann durch die Abstützung mit höheren Drücken, z. B. beim Spritzgießen gearbeitet werden, was die Herstellungsdauer der Dichtungen verringert und zudem eine größere Auswahl an Dichtungsmaterialien ermöglicht.

Die Erfindung wird nachfolgend in Ausführungsbeispielen anhand der zugehörigen Zeichnungen erläutert. Es zeigen:
- Figur 1: eine Bipolarplatte mit einer, die Bereichs-Dichtungen umschließenden Kühlmittel-Verbindungsnaht,
- Figur 2: eine Bipolarplatte mit einer, von den Bereichs-Dichtungen umschlossenen Kühlmittel-Verbindungsnaht, und
- Figur 3: eine schematische Darstellung einer Brennstoffzelle.

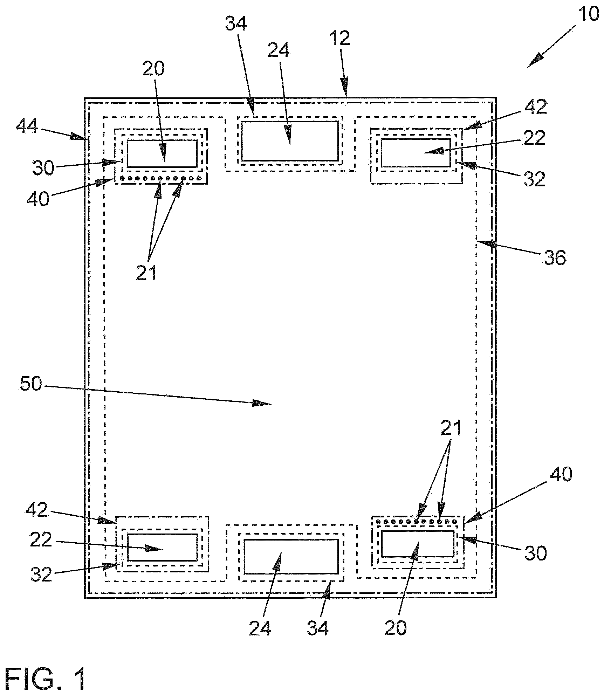

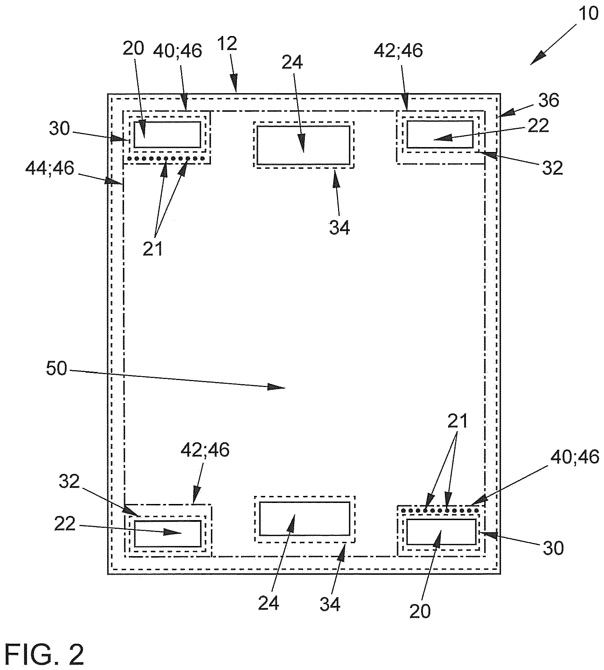

Die in den Figuren 1 und 2 gezeigten Bipolarplatten 10 können insbesondere in Bezug auf die Dichtungen im Wesentlichen symmetrisch bezüglich einer Symmetrieebene ausgebildet sein, welche zwischen zwei Einzelplatten 12 der Bipolarplatte 10 verläuft. Somit sind die Normalprojektionen von Dichtungen auf beiden Seiten 14, 16 (Hauptflächen) der Bipolarplatte 10 im Wesentlichen deckungsgleich. Die Dichtungen (bzw. deren Verläufe) sind als gestrichelte Linien und die Verbindungsnähte (bzw. deren Verläufe) als strichpunktierte Linien schematisch dargestellt.

Figur 1 zeigt eine Draufsicht auf eine der Flachseiten der schematisch dargestellten Bipolarplatte 10, wobei der Blick auf die Brennstoff-Seite 14 der Bipolarplatte 10 gerichtet ist. Die Oxidationsmittel-Seite 16 der Bipolarplatte 10 ist die der Brennstoff-Seite 14 gegenüberliegende Flachseite der Bipolarplatte 10.

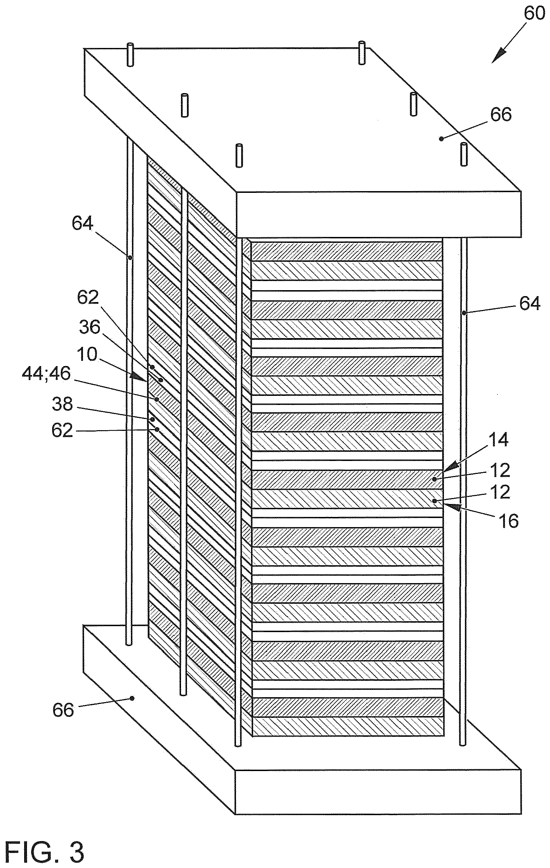

Die Bipolarplatte 10 weist eine Kühlmittel-Verbindungsnaht 44 auf, welche die Brennstoff-Bereichs-Dichtung 36 und die Oxidationsmittel-Bereichs-Dichtung 38 (siehe Figur 3) umlaufend umschließt. Die Kühlmittel-Verbindungsnaht 44 stellt eine äußere Begrenzung eines Kühlmittel-Hohlraums im Inneren der Bipolarplatte 10 zwischen den beiden Einzelplatten 12 dar. Da die Kühlmittel-Verbindungsnaht 44 gegen die Umgebung dichtet kann sie auch als eine äußere Schweißnaht bezeichnet werden. Analog dazu können die Bereichs-Dichtungen 36, 38 als äußere Dichtungen bezeichnet werden.

Die Kühlmittel-Verbindungsnaht 44 umschließt zudem Kühlmittel-Öffnungen 24 und Kühlmittel-Dichtungen 34. Die Kühlmittel-Dichtung 34 dichtet ebenfalls gegen die Umgebung und kann somit auch als äußere Dichtung bezeichnet werden. Die Kühlmittel-Öffnungen 24 sind zwischen den beiden Einzelplatten 12 strömungstechnisch mit dem Kühlmittel-Hohlraum verbunden. Die Kühlmittel-Dichtungen 34 umschließen die Kühlmittel-Öffnungen 24 umlaufend und sind zwischen der Kühlmittel-Verbindungsnaht 44 und den Bereichs-Dichtungen 36, 38 angeordnet. Somit sind die Kühlmittel-Dichtungen 34 außerhalb der Bereichs-Dichtungen 36, 38 angeordnet, was bewirkt, dass Brennstoff oder Oxidationsmittel nicht über die Kühlmittel-Dichtungen 34 in den Kühlkreislauf gelangen können.

Die Brennstoff-Bereichs-Dichtung 36 umschließt einen Brennstoff-Bereich 50, während auf der gegenüberliegenden Flachseite der Bipolarplatte 10 die Oxidationsmittel-Bereichs-Dichtung 38 einen Oxidationsmittel-Bereich (nicht dargestellt) umschließt. Der Brennstoff-Bereich 50 und der Oxidationsmittel-Bereich entsprechen innerhalb eines Brennstoffzellenstapels einem chemisch aktiven Bereich.

Zudem umschließen die Bereichs-Dichtungen 36, 38 Brennstoff-Verbindungsnähte 40, welche jeweils eine Brennstoff-Dichtung 30 umlaufend umschließen. Die Brennstoff-Dichtungen 30 umschließen wiederum jeweils eine Brennstoff-Öffnung 20. Ferner umschließen die Bereichs-Dichtungen 36, 38 Oxidationsmittel-Verbindungsnähte 42, welche jeweils eine Oxidationsmittel-Dichtung 32 umlaufend umschließen. Die Oxidationsmittel-Dichtungen 32 umschließen wiederum jeweils eine Oxidationsmittel-Öffnung 22. Die Brennstoff-Dichtungen 30 und die Oxidationsmittel-Dichtungen 32 können als innere Dichtungen bezeichnet werden, da diese einzelne Betriebsmedien gegeneinander dichten. Ebenso können die Brennstoff-Verbindungsnähte 40 und die Oxidationsmittel-Verbindungsnähte 42 als innere Verbindungsnähte bezeichnet werden, da diese ebenso die einzelnen Betriebsmedien gegeneinander dichten

Im Beispiel verlaufen die Brennstoff-Dichtungen 30 und die Oxidationsmittel-Dichtungen 32 innerhalb der Brennstoff-Verbindungsnähte 40 und der Oxidationsmittel-Verbindungsnähte 42. Die Brennstoff-Einheiten umfassen zudem auf der gezeigten Brennstoff-Seite 14 zwischen den Brennstoff-Dichtungen 30 und den Brennstoff-Verbindungsnähten 40 Aussparungen 21. Die Aussparungen 21 durchdringen die der Brennstoff-Seite 14 zugewandte Einzelplatte 12 und stellen somit strömungstechnische Verbindungen zwischen den Brennstoff-Öffnungen 20 und dem Brennstoff-Bereich 50 her. Auch auf der nicht gezeigten Oxidationsmittel-Seite 16 finden sich zwischen den Oxidationsmittel-Dichtungen 32 und den Oxidationsmittel-Verbindungsnähten 40 solche Aussparungen 21. Die Aussparungen 21 durchdringen dabei die der Oxidationsmittel-Seite 16 zugewandte Einzelplatte 12 und stellen damit eine strömungstechnische Verbindung zwischen den Oxidationsmittel-Öffnungen 22 und dem Oxidationsmittel-Bereich (nicht dargestellt) her.

Figur 2 zeigt eine weitere bevorzugte Ausgestaltung der Erfindung. Im Unterschied zu Figur 1 umschließen die Brennstoff-Bereichs-Dichtung 36 und die Oxidationsmittel-Bereichs-Dichtung 38 (siehe Figur 3) die Kühlmittel-Verbindungsnaht 44 umlaufend. Dies hat zur Folge, dass die Kühlmittel-Verbindungsnaht 44, die Brennstoff-Verbindungsnaht 40 und die Oxidationsmittel-Verbindungsnaht 42 zueinander benachbart angeordnet sind, ohne, dass zwischen ihnen eine der Bereichs-Dichtungen 32 verläuft. Somit können die Verbindungsnähte 40, 42, 44 wie abgebildet als eine kombinierte Verbindungsnaht 46 integral ausgeführt werden. Die kombinierte Verbindungsnaht 46 kann somit einerseits als äußere, andererseits auch als innere Verbindungsnaht bezeichnet werden. Da die Kühlmittel-Verbindungsnaht 44 gemäß diesem Ausführungsbeispiel innerhalb der Brennstoff-Bereichs-Dichtung 36 und der Oxidationsmittel-Bereichs-Dichtung 38 verläuft, kann auch die Kühlmittel-Dichtung 34 nicht mehr außerhalb der Bereichs-Dichtungen 36 angeordnet sein.

Die Dichtungen 30, 32, 34, 36 der Figuren 1 und 2 sind mit den Einzelplatten 12 verbunden. Innerhalb einer Brennstoffzelle 60 (vergleiche Figur 3) dichten die Dichtungen 30, 32, 34, 36 einen Spalte zwischen der Bipolarplatte 10 und der angrenzenden Membran-Elektroden-Einheiten 62 umlaufend. Jede der Verbindungsnähte 40, 42, 44 verbindet die beiden Einzelplatten 12 miteinander und dichtet einen Spalt zwischen den Einzelplatten 12 umlaufend.

Wie in den Figuren 1 und 2 ersichtlich ist, wurden mittels der oben beschriebenen Anordnungen der Dichtungen 30, 32, 34, 36 und der Verbindungsnähte 40, 42, 44 Bipolarplatten 10 geschaffen, deren Verbindungsnähte 40, 42, 44 die Dichtungen 30, 32, 34, 36 weder kreuzen, noch überlappen, was beachtliche Vorteile bezüglich der Herstellung der Bipolarplatte 10 mit sich bringt.

Figur 3 zeigt in einer schematischen Darstellung eine Brennstoffzelle 60 umfassend mehrere Membran-Elektroden-Anordnungen 62. Die Membran-Elektroden-Anordnungen 62 sind alternierend mit erfindungsgemäßen Bipolarplatten 10 gemäß Figur 2 zu einer Brennstoffzelle 60 (also zu einem Brennstoffzellenstapel) gestapelt.

Die Bipolarplatten 10 versorgen die Membran-Elektroden-Einheiten 62 über Gasdiffusionslagen mit den Reaktanten, also dem Brennstoff (zum Beispiel Wasserstoff) und dem Oxidationsmittel (zum Beispiel Sauerstoff aus Luft), wozu geeignete Kanäle in den Bipolarplatten 10 vorgesehen sein können. Zudem verbinden die Bipolarplatten 10 zwei angrenzende Membran-Elektroden-Einheiten 62 elektrisch leitfähig, wodurch diese in Reihe geschaltet sind.

Die Dichtungen 30, 32, 34, 36 der Bipolarplatten 10 dichten die Räume zwischen den Membran-Elektroden-Einheiten 62, insbesondere den Membranen und den Bipolarplatten 10 ab und verhindern somit ein Austreten der Betriebsmedien aus der Brennstoffzelle 60 während des Betriebs. Die schematisch dargestellte Kühlmittel-Verbindungsnaht 44, bzw. kombinierte Verbindungsnaht 46 verhindert ein Austreten des Kühlmediums aus der Brennstoffzelle 60

Um eine Funktionsfähigkeit der Dichtungen 30, 32, 34, 36 sowie einen elektrisch leitfähigen Kontakt der Bipolarplatten 10 zu den Membran-Elektroden-Einheiten 62 auch bei Vibrationen (z. B. durch eine Verwendung in einem Kraftfahrzeug) zu gewährleisten, wird die Brennstoffzelle 60 typischerweise verpresst. Dies erfolgt in der Regel über zwei Endplatten 66, welche an beiden Enden der Brennstoffzelle 60 angeordnet sind, in Kombination mit mehreren Zugelementen 64. Die Zugelemente 64 leiten Zugkräfte in die Endplatten 66, sodass die Endplatten 66 die Brennstoffzelle 60 zusammenpressen.

Im folgenden wird anhand einer bevorzugten Ausgestaltung ein Verfahren zur Herstellung einer Bipolarplatte gemäß den Figuren 1 und 2 erörtert:
Zunächst werden die Brennstoff-Dichtungen 30, die Oxidationsmittel-Dichtungen 32, die Kühlmittel-Dichtungen 34 und die Brennstoff-Bereichs-Dichtung 36 auf jener Einzelplatte 12 hergestellt, welche später an der Brennstoff-Seite 14 der Bipolarplatte 10 angeordnet sein soll. Zudem werden die Brennstoff-Dichtungen 30, die Oxidationsmittel-Dichtungen 32, die Kühlmittel-Dichtungen 34 und die Oxidationsmittel-Bereichs-Dichtung 38 auf jener Einzelplatte 12 hergestellt, welche später an der Oxidationsmittel-Seite 16 der Bipolarplatte 10 angeordnet sein soll. Das Herstellen der Dichtungen 30, 32, 34, 36 auf den Einzelplatten 12 kann beispielsweise mittels eines Spritzgussverfahrens erfolgen. Typischerweise wird dazu innerhalb eines Spritzgusswerkzeugs ein Ausgangsmaterial an die Einzelplatten 12 gespritzt. In diesem Fall umfasst das Herstellen der Dichtungen 30, 32, 34, 36 üblicherweise einen Schritt des Aushärtens des Ausgangsmaterials der Dichtungen 30, 32, 34, 36.

Anschließend werden die Einzelplatten 12 derart zueinander positioniert, sodass die, den Dichtungen 30, 32, 34, 36 gegenüberliegenden Seiten der Einzelplatten 12 aneinander anliegen.

In einem nächsten Schritt können die Verbindungsnähte 40, 42, 44, 46 zwischen den beiden Einzelplatten 12 hergestellt werden. Die Verbindungsnähte 40, 42, 44, 46 können z. B. Schweißnähte sein, welche typischerweise mittels eines Laserschweißverfahrens hergestellt werden können. Dadurch können insbesondere Einzelplatten 12 aus (metallischem) Blech einfach und dichtend verbunden werden. Dadurch, dass sich die Verbindungsnähte 40, 42, 44, 46 und die Dichtungen 30, 32, 34, 36 gemäß den Figuren 1 und 2 weder kreuzen, noch überlappen, können die Verbindungsnähte 40, 42, 44, 46 von den Dichtungen 30, 32, 34, 36 beabstandet hergestellt werden.

Durch die erfindungsgemäße Bipolarplatte 10 und das erfindungsgemäße Verfahren zur Herstellung der Bipolarplatte 10 werden somit Ausschüsse und Fertigungszeiten reduziert, wodurch die Herstellungskosten von Brennstoffzellen 60 als gesamtes verringert werden.

### Bezugszeichenliste

- 10: Bipolarplatte
- 12: Einzelplatte
- 14: Brennstoff-Seite
- 16: Oxidationsmittel-Seite
- 20: Brennstoff-Öffnung
- 21: Aussparung
- 22: Oxidationsmittel-Öffnung
- 24: Kühlmittel-Öffnung

- 30: Brennstoff-Dichtung
- 32: Oxidationsmittel-Dichtung
- 34: Kühlmittel-Dichtung
- 36: Brennstoff-Bereichs-Dichtung
- 38: Oxidationsmittel-Bereichs-Dichtung

- 40: Brennstoff-Verbindungsnaht
- 42: Oxidationsmittel-Verbindungsnahtnaht
- 44: Kühlmittel-Verbindungsnaht
- 46: kombinierte Verbindungsnaht

- 50: Brennstoff-Bereich

- 60: Brennstoffzelle
- 62: Membran-Elektroden-Einheit
- 64: Zugelement
- 66: Endplatte

## Patentansprüche

1. Bipolarplatte (10) für eine Brennstoffzelle (60), wobei die Bipolarplatte (10) eine Brennstoff-Seite (14), eine Oxidationsmittel-Seite (16), zwei Einzelplatten (12) und einen, zwischen den Einzelplatten (12) angeordneten Kühlmittel-Hohlraum aufweist, wenigstens eine der Einzelplatten (12) an ihrer Außenfläche wenigstens eine Dichtung (30, 32, 34, 36) aufweist und die Einzelplatten (12) mittels wenigstens einer Verbindungsnaht (40, 42, 44) verbunden sind, **dadurch gekennzeichnet, dass** sich die wenigstens eine Verbindungsnaht (40, 42, 44) mit der wenigstens einen Dichtung (30, 32, 34, 36) nicht kreuzt und/oder überlappt.

2. Bipolarplatte (10) nach Anspruch 1, wobei die Bipolarplatte (10) aufweist:
- wenigstens eine, die Bipolarplatte (10) durchdringende Brennstoff-Öffnung (20), wobei die wenigstens eine Dichtung (30, 32, 34, 36) wenigstens eine zumindest auf der Oxidationsmittel-Seite (16) angeordnete Brennstoff-Dichtung (30) umfasst, die wenigstens eine Verbindungsnaht (40, 42, 44) wenigstens eine Brennstoff-Verbindungsnaht (40) umfasst, und die wenigstens eine Brennstoff-Öffnung (20) von der wenigstens einen Brennstoff-Dichtung (30) und der wenigstens einen Brennstoff-Verbindungsnaht (40) umlaufend umschlossen ist; und/oder
- wenigstens eine, die Bipolarplatte (10) durchdringende Oxidationsmittel-Öffnung (22), wobei die wenigstens eine Dichtung (30, 32, 34, 36) wenigstens eine zumindest auf der Brennstoff-Seite (14) angeordnete Oxidationsmittel-Dichtung (32) umfasst, die wenigstens eine Verbindungsnaht (40, 42, 44) wenigstens eine Oxidationsmittel-Verbindungsnaht (42) umfasst, und die wenigstens eine Oxidationsmittel-Öffnung (22) von der wenigstens einen Oxidationsmittel-Dichtung (32) und der wenigstens einen Oxidationsmittel-Verbindungsnaht (42) umlaufend umschlossen ist; und/oder
- wenigstens eine, die Bipolarplatte (10) durchdringende Kühlmittel-Öffnung (24), welche strömungstechnisch mit dem Kühlmittel-Hohlraum verbunden ist, wobei die wenigstens eine Dichtung (30, 32, 34, 36) beidseitig der Bipolarplatte (10) angeordnete Kühlmittel-Dichtungen (34) umfasst, welche die wenigstens eine Kühlmittel-Öffnung (24) umlaufend umschließen.

3. Bipolarplatte nach Anspruch 2, wobei
- die wenigstens eine Dichtung (30, 32, 34, 36) wenigstens eine Brennstoff-Dichtung (30) umfasst, welche auf der Brennstoff-Seite (14) die wenigstens eine Brennstoff-Öffnung (20) umlaufend umschließt und bevorzugt die wenigstens eine Brennstoff-Dichtung (30) zwischen der wenigstens einen Brennstoff-Verbindungsnaht (40) und der wenigstens einen Brennstoff-Öffnung (20) angeordnet ist und zwischen der Brennstoff-Dichtung (30) und der Brennstoff-Verbindungsnaht (40) zumindest eine, die Einzelplatte (12) auf der Brennstoff-Seite (14) durchdringende Aussparung (21) angeordnet ist und/oder
- die wenigstens eine Dichtung (30, 32, 34, 36) wenigstens eine Oxidationsmittel-Dichtung (32) umfasst, welche auf der Oxidationsmittel-Seite (16) die wenigstens eine Oxidationsmittel-Öffnung (22) umlaufend umschließt und
bevorzugt die Oxidationsmittel-Dichtung (32) zwischen der wenigstens einen Oxidationsmittel-Verbindungsnaht (42) und der wenigstens einen Oxidationsmittel-Öffnung (22) angeordnet ist und zwischen der Oxidationsmittel-Dichtung (32) und der Oxidationsmittel-Verbindungsnaht (42) zumindest eine, die Einzelplatte (12) auf der Oxidationsmittel-Seite (16) durchdringende Aussparung (21) angeordnet ist.

4. Bipolarplatte nach einem der vorhergehenden Ansprüche, wobei
- die wenigstens eine Verbindungsnaht (40, 42, 44) eine Kühlmittel-Verbindungsnaht (44) umfasst, welche den Kühlmittel-Hohlraum und insbesondere die Kühlmittel-Dichtungen (36) der wenigstens einen Kühlmittel-Öffnung (24) umlaufend umschließt;
und/oder
- die wenigstens eine Dichtung (30, 32, 34, 36) eine Brennstoff-Bereichs-Dichtung (36) umfasst, welche einen Brennstoff-Bereich (50) auf der Brennstoff-Seite (14) und insbesondere die wenigstens eine Brennstoff-Verbindungsnaht (40) umlaufend umschließt;
und/oder
- die wenigstens eine Dichtung (30, 32, 34, 36) eine Oxidationsmittel-Bereichs-Dichtung (38) umfasst, welche einen Oxidationsmittel-Bereich auf der Oxidationsmittel-Seite (16) und insbesondere die wenigstens eine Oxidationsmittel-Verbindungsnaht (42) umlaufend umschließt.

5. Bipolarplatte nach Anspruch 4, wobei die Kühlmittel-Verbindungsnaht (44) zumindest eine der Bereichs-Dichtungen (36, 38) umlaufend umschließt.

6. Bipolarplatte nach Anspruch 5, wobei die Kühlmittel-Dichtungen (34) wenigstens einer Kühlmittelöffnung (24) außerhalb der zumindest einen umlaufend umschlossenen Bereichs-Dichtung (36, 38) angeordnet sind.

7. Bipolarplatte nach Anspruch 4, wobei zumindest eine der Bereichs-Dichtungen (36, 38) die Kühlmittel-Verbindungsnaht (44) umlaufend umschließt und die Kühlmittel-Verbindungsnaht (44) mit wenigstens einer der Brennstoff-Verbindungsnähte (40) und/oder wenigstens einer der Oxidationsmittel-Verbindungsnähte (42) als eine kombinierte Verbindungsnaht (46) integral ausgeführt ist.

8. Brennstoffzelle (60) umfassend wenigstens eine Bipolarplatte (10) nach einem der vorhergehenden Ansprüche und wenigstens zwei Membran-Elektroden-Einheiten (62), wobei die Bipolarplatte (10) zwischen den Membran-Elektroden-Einheiten (62) angeordnet ist.

9. Verfahren zur Herstellung einer Bipolarplatte nach einem der Ansprüche 1 bis 7, umfassend die folgenden Schritte:
- Herstellen von Dichtungen (30, 32, 34, 36) auf den Einzelplatten (12);
- Herstellen von Verbindungsnähte (40, 42, 44) zwischen den Einzelplatten (12).

10. Verfahren nach Anspruch 9, wobei das Herstellen der Dichtungen (30, 32, 34, 36) zeitlich vor dem Herstellen der Verbindungsnähte (40, 42, 44) erfolgt.

## Claims

1. Bipolar plate (10) for a fuel cell (60), wherein the bipolar plate (10) has a fuel side (14), an oxidant side (16), two individual plates (12) and a coolant cavity arranged between the individual plates (12), at least one of the individual plates (12) has, on its outer face, at least one seal (30, 32, 34, 36) and the individual plates (12) are connected by means of at least one connecting seam (40, 42, 44), **characterized in that** the at least one connecting seam (40, 42, 44) neither crosses nor overlaps the at least one seal (30, 32, 34, 36).

2. Bipolar plate (10) according to Claim 1, wherein the bipolar plate (10) has:
- at least one fuel opening (20) which passes through the bipolar plate (10), wherein the at least one seal (30, 32, 34, 36) comprises at least one fuel seal (30) arranged at least on the oxidant side (16), the at least one connecting seam (40, 42, 44) comprises at least one fuel connecting seam (40), and the at least one fuel opening (20) is circumferentially enclosed by the at least one fuel seal (30) and the at least one fuel connecting seam (40); and/or
- at least one oxidant opening (22) which passes through the bipolar plate (10), wherein the at least one seal (30, 32, 34, 36) comprises at least one oxidant seal (32) arranged at least on the fuel side (14), the at least one connecting seam (40, 42, 44) comprises at least one oxidant connecting seam (42), and the at least one oxidant opening (22) is circumferentially enclosed by the at least one oxidant seal (32) and the at least one oxidant connecting seam (42); and/or
- at least one coolant opening (24) which passes through the bipolar plate (10) and which is fluidically connected to the coolant cavity, wherein the at least one seal (30, 32, 34, 36) comprises coolant seals (34) arranged on both sides of the bipolar plate (10), which circumferentially enclose the at least one coolant opening (24).

3. Bipolar plate according to Claim 2, wherein
- the at least one seal (30, 32, 34, 36) comprises at least one fuel seal (30) which circumferentially encloses the at least one fuel opening (20) on the fuel side (14) and preferably the at least one fuel seal (30) is arranged between the at least one fuel connecting seam (40) and the at least one fuel opening (20), and between the fuel seal (30) and the fuel connecting seam (40) there is arranged at least one cutout (21) which passes through the individual plate (12) on the fuel side (14), and/or
- the at least one seal (30, 32, 34, 36) comprises at least one oxidant seal (32) which circumferentially encloses the at least one oxidant opening (22) on the oxidant side (16) and preferably the oxidant seal (32) is arranged between the at least one oxidant connecting seam (42) and the at least one oxidant opening (22), and between the oxidant seal (32) and the oxidant connecting seam (42) there is arranged at least one cutout (21) which passes through the individual plate (12) on the oxidant side (16).

4. Bipolar plate according to one of the preceding claims, wherein
- the at least one connecting seam (40, 42, 44) comprises a coolant connecting seam (44) which circumferentially encloses the coolant cavity and in particular the coolant seals (36) of the at least one coolant opening (24);
and/or
- the at least one seal (30, 32, 34, 36) comprises a fuel area seal (36) which circumferentially encloses a fuel area (50) on the fuel side (14) and in particular the at least one fuel connecting seam (40);
and/or
- the at least one seal (30, 32, 34, 36) comprises an oxidant area seal (38) which circumferentially encloses an oxidant area on the oxidant side (16) and in particular the at least one oxidant connecting seam (42).

5. Bipolar plate according to Claim 4, wherein the coolant connecting seam (44) circumferentially encloses at least one of the area seals (36, 38).

6. Bipolar plate according to Claim 5, wherein the coolant seals (34) of at least one coolant opening (24) are arranged outside the at least one circumferentially enclosed area seal (36, 38).

7. Bipolar plate according to Claim 4, wherein at least one of the area seals (36, 38) circumferentially encloses the coolant connecting seam (44) and the coolant connecting seam (44) is made integrally with at least one of the fuel connecting seams (40) and/or with at least one of the oxidant connecting seams (42), as a combined connecting seam (46).

8. Fuel cell (60) comprising at least one bipolar plate (10) according to one of the preceding claims, and at least two membrane electrode assemblies (62), wherein the bipolar plate (10) is arranged between the membrane electrode assemblies (62).

9. Method for producing a bipolar plate according to one of Claims 1 to 7, comprising the following steps:
- producing seals (30, 32, 34, 36) on the individual plates (12);
- producing connecting seams (40, 42, 44) between the individual plates (12).

10. Method according to Claim 9, wherein the production of the seals (30, 32, 34, 36) takes place temporally prior to the production of the connecting seams (40, 42, 44).

## Revendications

1. Plaque bipolaire (10) destinée à une pile à combustible (60), dans laquelle la plaque bipolaire (10) comporte un côté combustible (14), un côté agent oxydant (16), deux plaques individuelles (12) et une enceinte à réfrigérant disposée entre les plaques individuelles (12), au moins l'une des plaques individuelles (12) présente sur sa face extérieure au moins un joint d'étanchéité (30, 32, 34, 36) et les plaques individuelles (12) sont reliées au moyen d'au moins une soudure d'assemblage (40, 42, 44), **caractérisée en ce que** l'au moins une soudure d'assemblage (40, 42, 44) ne comporte aucun croisement et/ou aucun chevauchement avec l'au moins un joint d'étanchéité (30, 32, 34, 36).

2. Plaque bipolaire (10) selon la revendication 1, dans laquelle la plaque bipolaire (10) comporte :
- au moins une ouverture pour combustible (20) traversant la plaque bipolaire (10), dans laquelle l'au moins un joint d'étanchéité (30, 32, 34, 36) comprend au moins un joint d'étanchéité pour combustible (30) disposé au moins du côté agent oxydant (16), l'au moins une soudure d'assemblage (40, 42, 44) comprend au moins une soudure d'assemblage pour combustible (40), et l'au moins une ouverture pour combustible (20) est entourée circonférentiellement de l'au moins un joint d'étanchéité pour combustible (30) et de l'au moins une soudure d'assemblage pour combustible (40) ; et/ou
- au moins une ouverture pour agent oxydant (22) traversant la plaque bipolaire (10), dans laquelle au moins un joint d'étanchéité (30, 32, 34, 36) comprend au moins un joint d'étanchéité pour agent oxydant (32) disposé au moins du côté combustible (14), l'au moins une soudure d'assemblage (40, 42, 44) comprend au moins une soudure d'assemblage pour agent oxydant (42) et l'au moins une ouverture pour agent oxydant (22) est entourée circonférentiellement par l'au moins un joint d'étanchéité pour agent oxydant (32) et par l'au moins une soudure d'assemblage pour agent oxydant (42) ; et/ou
- au moins une ouverture pour réfrigérant (24) traversant la plaque bipolaire (10), qui est reliée par un système d'écoulement à l'enceinte à réfrigérant, dans laquelle l'au moins un joint d'étanchéité (30, 32, 34, 36) comprend des joints d'étanchéité pour réfrigérant (34) disposés de part et d'autre de la plaque bipolaire (10), qui entourent circonférentiellement l'au moins une ouverture pour réfrigérant (24).

3. Plaque bipolaire selon la revendication 2, dans laquelle :
- l'au moins un joint d'étanchéité (30, 32, 34, 36) comprend au moins un joint d'étanchéité pour combustible (30) qui entoure circonférentiellement l'au moins une ouverture pour combustible (20) côté combustible (14), et
- l'au moins un joint d'étanchéité pour combustible (30) est de préférence disposé entre l'au au moins une soudure d'assemblage pour combustible (40) et l'au moins une ouverture pour combustible (20) et en ce qu'au moins un évidement (21) traversant la plaque individuelle (12) côté combustible (14) est disposée entre le joint d'étanchéité pour combustible (30) et la soudure d'assemblage pour combustible (40), et/ou
- l'au moins un joint d'étanchéité (30, 32, 34, 36) comprend au moins un joint d'étanchéité pour agent oxydant (32) qui entoure circonférentiellement l'au moins une ouverture pour agent oxydant (22) côté agent oxydant (16), et
- le joint d'étanchéité pour agent oxydant (32) est de préférence disposé entre l'au moins une soudure d'assemblage pour agent oxydant (42) et l'au moins une ouverture pour agent oxydant (22) et au moins un évidement (21) traversant la plaque individuelle (12) côté agent oxydant (16) est disposé entre le joint d'étanchéité pour agent oxydant (32) et la soudure d'assemblage pour agent oxydant (42).

4. Plaque bipolaire selon l'une quelconque des revendications précédentes, dans laquelle :
- l'au moins une soudure d'assemblage (40, 42, 44) comprend une soudure d'assemblage pour réfrigérant (44) qui entoure circonférentiellement l'enceinte à réfrigérant et plus particulièrement, les joints d'étanchéité pour réfrigérant (36) de l'au moins une ouverture pour réfrigérant (24), et/ou
- l'au moins un joint d'étanchéité (30, 32, 34, 36) comprend un joint d'étanchéité de zone de combustible (36) qui entoure circonférentiellement une zone de combustible (50) côté combustible (14) et plus particulièrement, l'au moins une soudure d'assemblage pour combustible (40) ; et/ou
- l'au moins un joint d'étanchéité (30, 32, 34, 36) comprend un joint d'étanchéité de zone d'agent oxydant (38) qui entoure circonférentiellement une zone d'agent oxydant côté agent oxydant (16) et plus particulièrement, l'au moins une soudure d'assemblage pour d'agent oxydant (42).

5. Plaque bipolaire selon la revendication 4, dans laquelle la soudure d'assemblage pour réfrigérant (44) entoure circonférentiellement au moins l'un des joints d'étanchéité de zones (36, 38).

6. Plaque bipolaire selon la revendication 5, dans laquelle les joints d'étanchéité pour réfrigérant (34) d'au moins une ouverture pour réfrigérant (24) sont disposés à l'extérieur de l'au moins un joint d'étanchéité de zone (36, 38) entouré circonférentiellement.

7. Plaque bipolaire selon la revendication 4, dans laquelle au moins l'un des joints d'étanchéité de zones (36, 38) entoure circonférentiellement la soudure d'assemblage pour réfrigérant (44) et la soudure d'assemblage pour réfrigérant (44) est réalisée de manière solidaire d'une soudure d'assemblage pour combustible (40) et/ou d'au moins une soudure d'assemblage pour agent oxydant (42) sous la forme d'une soudure d'assemblage combinée (46).

8. Pile à combustible (60) comprenant au moins une plaque bipolaire (10) selon l'une quelconque des revendications précédentes et au moins deux unités à membranes-électrodes (62), dans laquelle la plaque bipolaire (10) est disposée entre les unités à membranes-électrodes (62).

9. Procédé de réalisation d'une plaque bipolaire selon l'une quelconque des revendications 1 à 7, comprenant les étapes consistant à :
- réaliser des joints d'étanchéité (30, 32, 34, 36) sur les plaques individuelles (12) ;
- réaliser des soudures d'assemblage (40, 42, 44) entre les plaques individuelles (12).

10. Procédé selon la revendication 9, dans lequel la réalisation des joints d'étanchéité (30, 32, 34, 36) est effectuée avant la réalisation des soudures d'assemblage (40, 42, 44).
